# EUROPEAN PATENT SPECIFICATION

(11) **EP 4 347 177 B1**
(45) Date of publication and mention of the grant of the patent: **02.04.2025**
(21) Application number: 22738702.4
(22) Date of filing: 25.05.2022
(51) Int. Cl.: B23K 37/02

(54) **WELDING BOOM**
SCHWEISSAUSLEGER
FLÈCHE DE SOUDAGE

(30) Priority: 27.05.2021 FI 20215624
(43) Date of publication of application: 10.04.2024
(73) Proprietor: MV-Welding Oy, 77430 Siikamäki (FI)
(72) Inventor: VEPSÄLÄINEN, Markus, 77570 Jäppilä (FI)
(74) Representative: Berggren Oy
(86) International application number: PCT/FI2022/050365
(87) International publication number: WO 2022/248773

(56) References cited:
- US-A1- 2011 186 556
- US-B2- 8 448 835

## Description

### Field of the invention

The invention relates to a welding boom.

### Background of the invention

Joints to be formed in walls of various large containers and other similar pieces by welding joints of steel sheets (that is, for example joint lines between the ends and the shell as well as the longitudinal seam of the shell of a cylindrical tank) are normally welded by applying MAG welding methods (MAG metal-cored wire welding, MAG solid wire welding or MAG flux-cored wire welding). Welding large containers or similar pieces manually by holding a welding gun is heavy precision work, partly because the welded seams to be formed are long and require that the welding gun is held precisely in alignment with the work piece for long periods of time. Moreover, manual welding of the pieces often requires reaching and inconvenient working positions. To solve this problem and to increase efficiency of the welding work, various movable welding booms have been developed for keeping the welding gun at the right distance with respect to the work piece and/or for moving it with respect to the work piece at a constant speed required for the welding seam. During welding by using welding booms of prior art, the head of the welding boom and the welding gun are normally moved along the welding seam by an actuator (for example, a linear motor, or the like), to achieve a steady motion and a speed precisely suitable to meet the quality requirements of a welding seam set by welding standards. It is also possible to move the work piece to be welded with respect to the welding gun, instead of or in addition to moving the welding gun. For example, when welding the ends of a cylindrical tank to the shell, it is common to rotate the tank with respect to its longitudinal axis of symmetry during the welding.

By using welding booms of prior art, it has been possible to lighten the work of a welder, to facilitate the achievement of sufficient precision, and to improve the efficiency of the work. However, welding booms of prior art involve the disadvantage of their limited applicability and suitability for a number of pieces in different shapes and sizes to be welded. Normally, welding booms of prior art are designed for a given use or for few different uses only, whereby a number of different welding booms have to be obtained for various tanks to be welded, for example, or part of the welding has to be done manually or by other alternative methods. In addition, the use of welding booms of prior art is often slow and laborious, because it is usually slow and laborious to shift them and to move the head for fastening the welding gun (i.e. the head of the welding boom) and to turn it to a suitable position with respect to the work piece before starting the actual welding work. Furthermore, welding booms of prior art have the disadvantage that because of the devices for moving the welding gun, arranged in the welding boom or in its vicinity, the head of the welding boom is bulky and difficult to fit in tight areas, such as inside a capsular or tubular piece having a small diameter or small inner dimensions.

US 8 448 835 B2 discloses welding boom comprising a base, a vertical column mounted on it, and a horizontal arm fastened to the vertical column, wherein a welding gun fastener is provided at the end of the horizontal arm for fastening a welding gun of a welding device to the end of the welding boom, wherein the horizontal arm of the welding boom is fastened to the vertical column to be movable by a distance in the longitudinal direction of the vertical column and/or in the longitudinal direction of the horizontal arm, wherein the welding boom comprises at least one actuator drive for moving the horizontal arm a distance in at least the longitudinal direction of the vertical column and/or the longitudinal direction of the vertical arm at an adjustable speed by means of the actuator drive during welding by using the welding boom.

### Brief summary of the invention

It is an aim of the invention to present a novel welding boom which is better suited for welding tanks and other similar pieces of different sizes. In addition, it is an aim of the invention to present a novel welding boom, whereby, at the stage of preparing for welding, the head of the welding boom and the welding gun attached to it can be moved more easily and more quickly to a desired position for starting welding with respect to the piece to be welded. Further, it is an aim of the invention to present a welding boom which can be easily fitted even in tight areas.

The aim of the invention is achieved by a welding boom comprising a vertical column and a horizontal arm, wherein the horizontal arm is fastened with respect to the vertical column to be movable in the longitudinal direction of the vertical column and in the longitudinal direction of the horizontal arm itself so that these movements comprise quick manual movements for moving the head of the welding boom to a desired position for starting welding, and wherein the horizontal arm is further configured to be movable with respect to the vertical column by an actuator and to be adjustable in its speed during the welding, at least in the longitudinal direction of the horizontal arm, for moving a welding gun attached to one end of the horizontal arm at a speed required for the welding. More precisely the welding boom according to the invention is characterized in what will be presented in the independent claim 1. Dependent claims 2 to 11 present some advantageous embodiments of the welding boom according to the invention.

The welding boom according to the invention has the advantage of making it possible to weld a number of containers or similar pieces of different sizes to be made of sheet steel by using one and the same welding boom. Another advantage of the welding boom according to the invention is that quick manual movements make it easier and faster to arrange the head of the welding boom in the position for starting welding. Furthermore, the welding boom according to the invention has the advantage that the head of the welding boom can be made small in size, to be easily fitted even in narrow areas.

### Description of the drawings

In the following, the invention will be described in more detail with reference to the appended drawings, in which
Fig. 1 shows a welding boom according to the invention in a side view from the direction of the side of a horizontal arm comprised in the welding boom;
Fig. 2 shows the welding boom of Fig. 1 in a side view from the side of a counterweight comprised in the welding boom;
Fig. 3 shows the welding boom of the preceding figures in a front view; and
Fig. 4 shows the welding boom of the preceding figures in a rear view.

### Detailed description of preferred embodiments of the invention

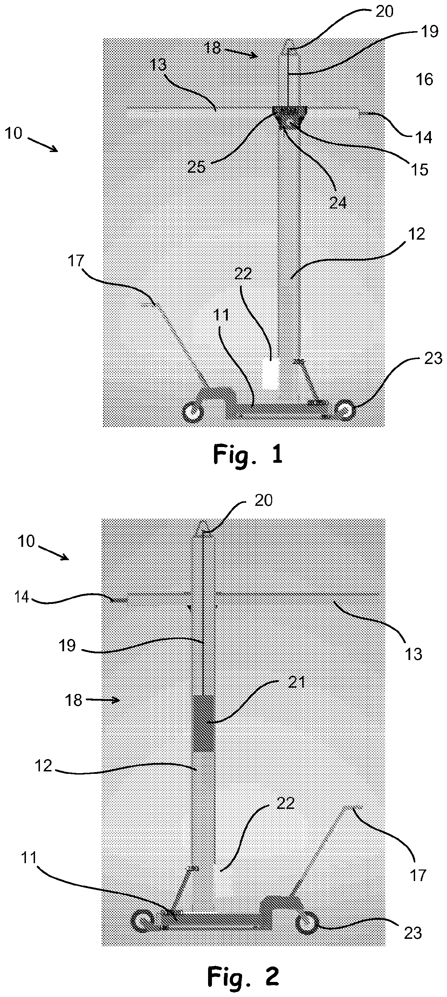

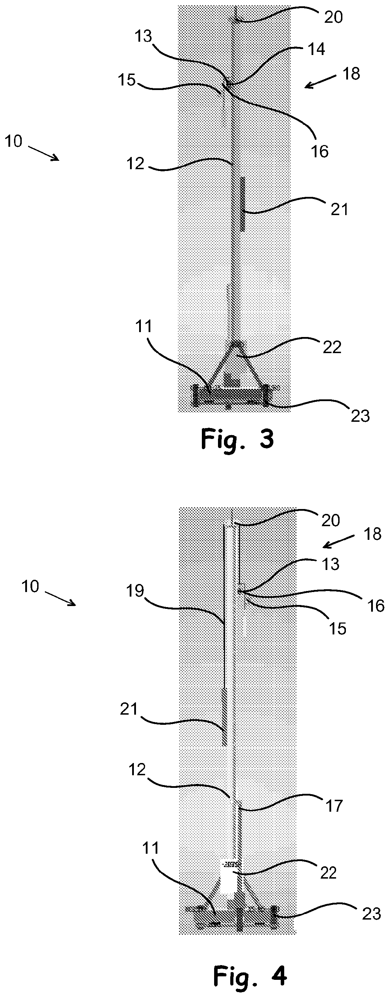

Figures 1 to 4 show a welding boom 10 according to the invention. It comprises a base 11, a vertical column 12 mounted on the base, and a horizontal arm 13 mounted on the vertical column. At an end of the horizontal arm 13, a welding gun fastener 14 is provided for fastening a welding gun to the head of the welding boom 10.

The horizontal arm 13 is mounted on the vertical column 12 to be freely movable to different positions in its longitudinal direction (by a maximum of the length of the vertical column 12) and in the longitudinal direction of the horizontal arm 13 (by a maximum of the length of the horizontal arm 13) and to be locked with respect to the vertical column 12 by a locking device 15. The horizontal arm 13 can thus be manually moved in the longitudinal direction of the vertical column 12 and in the longitudinal direction of the horizontal arm 13 into different positions with respect to the horizontal column 12, and then locked in the desired position by the locking device 15. Thus, the welding boom 10 of Figs. 1 to 4 is provided with manual adjustment of an initial position, whereby the welding gun fastener 14 at the end of the horizontal arm 13, with the welding gun fixed in it, can be moved by quick manual adjustments of the initial position to a desired position for starting welding.

In addition to the initial position adjustment, the welding boom 10 of Figs. 1 to 4 comprises actuator drives for moving the horizontal arm 13 at an adjustable speed in the longitudinal direction of the vertical column 12 and in the longitudinal direction of the horizontal arm 13, to generate the welding motion of the welding gun attached to the welding gun fastener 14. The actuator drives always move the horizontal arm 13 in a selected direction of movement with respect to the vertical column 12, irrespective of the initial position adjustment made. Consequently, the position for starting the welding motion can be determined by the initial position adjustment, and the direction of movement of the welding gun and the speed of the welding motion can be determined by the selected speeds of the actuator drives.

Moreover, in the embodiment of Figs. 1 to 4, the vertical column 12 is mounted on the base 11 to be movable a distance by an actuator in the transverse direction with respect to the horizontal arm 13 and the vertical column 12, for generating a transverse welding motion of the welding boom 10. Consequently, when the welding boom 10 of Figs. 1 to 4 is used for welding, the welding gun can be moved in the longitudinal direction of the vertical column 12, in the longitudinal direction of the horizontal arm 13, and also in a direction transverse to the vertical plane formed by these. In other words, with the welding boom 10 of Figs. 1 to 4, the welding gun can be moved along a path to be determined in a three-dimensional space during welding. In another embodiment of the welding boom according to the invention, the vertical column may be mounted to be pivotable about an axis parallel to the vertical column with respect to the base, in addition to or instead of its movement transverse to the travel direction of the base. Such a pivoting movement of the welding boom may also be provided with the above-described manual adjustment of the initial position as well as with an actuator drive (for generating a respective welding motion). This increases further the freedom to select a suitable initial position for welding in various ways with respect to the location of the base of the welding boom, as well as to implement the direction of the welding motion and the way of implementing the motion. On the other hand, in an embodiment of the welding boom according to the invention, simpler than the embodiment shown in Figs. 1 to 4, the vertical column may be rigidly mounted on the base, whereby the welding boom can only be moved in the longitudinal direction of the horizontal boom and in the vertical direction during the welding motion. Furthermore, there may be another embodiment even simpler than the above-mentioned embodiments, wherein the welding motion is parallel to the longitudinal direction of the horizontal arm or the longitudinal direction of the vertical column only, whereby the welding boom is intended for making welding seams in the horizontal direction or in the vertical direction only.

In the embodiment of Figs. 1 to 4, the vertical column 12 and the horizontal arm 13 are aluminium profile beams, but in other embodiments they may be made of e.g. steel or another suitable material (e.g. composite). In any case, their structure should be sufficiently rigid and stable, so that the welding gun can be guided with a sufficient precision along the joint of the pieces to be welded during the welding motion of the head of the welding boom 10 driven by an actuator.

In the embodiment of Figs. 1 to 4, the horizontal arm 13 is placed on that side of the vertical column 12 shown in Fig. 1 (i.e. *on the side* of the vertical column 12 *facing the horizontal arm)* Moreover, in the embodiment of Figs. 1 to 4, an intermediate frame 16 is provided between the vertical column 12 and the horizontal arm 13. For achieving the above described movable fastening, guide tracks or the like are provided on opposite sides of the vertical column 12, wherein a first element 24 of the intermediate frame 16, which is connected to the vertical column and through which the vertical column 12 is fitted, is fastened to the guide tracks by means of corresponding guide tracks in the first element 24, to be movable in the longitudinal direction of the vertical column 12. The horizontal arm 13, in turn, is fitted through a second element 25 of the intermediate frame 16 by means of interlinkable guide tracks in the second element 25 and in the horizontal arm 13, to be movable in the longitudinal direction of the horizontal arm 13. The first element 24 and the second element 25 of the intermediate frame 14 are in a position perpendicular to each other. Thus, the intermediate frame 16 movable along the vertical column 12, the horizontal arm 13 connected to it, and the welding gun fastener 14 at the end thereof, move up or down along the vertical column 12. Movement in the longitudinal direction of the horizontal arm 13, in turn, enables the movement of the welding gun fastener 14 at the end of the horizontal arm 13 forward and backward with respect to the horizontal column 12 and the intermediate frame 16 (farther away and closer to the vertical column 12 and the intermediate frame 16).

In the embodiment of Figs. 1 to 4, the intermediate frame 16 is implemented so that the first element 24 therein comprises a sleeve extending around the vertical column, and the second element 25 comprises a sleeve extending around the horizontal arm 13, the inner faces of the sleeves being provided with guide tracks corresponding and fitted to the guide tracks in the vertical column 12 and the horizontal arm 13. The cross-sections of these sleeves correspond to the cross-sections of the vertical column 12 and the horizontal arm 13 so that the vertical column 12 and the horizontal arm 13 can be fitted through them in the way shown in Figs. 1 to 4. In this way, the horizontal arm 13 can be fastened to the intermediate frame 16, and the intermediate frame 16 can be fastened to the vertical column 12, to be functionally movable as described above. In some other embodiments, the horizontal arm and the vertical column may be connected to each other in the above described way by means of different intermediate frames or even in a way totally different from using an intermediate frame of the above described type. However, the operation of the welding boom requires the use of an intermediate element or slide between the vertical column and the horizontal arm to make the horizontal arm movable with respect to the vertical column, in two directions perpendicular to each other in the same plane, as described above.

The locking device 15 is a coupling device operated by a manual lever for locking the horizontal arm 13 in a releasable way so that the horizontal arm 13 can be moved with respect to the vertical column 12 by actuator drives only.

Consequently, the locking device 15 in the embodiment of Figs. 1 to 4 is a mechanical coupling device arranged in the intermediate frame 16 and having two positions; in the first position, it releases the coupling of the actuator drives to the vertical column 12, whereby the horizontal arm 13 can be freely moved with respect to the vertical column 12, as described above, by moving it manually; and in the second position, it connects the actuator drives between the horizontal arm 13 and the vertical column 12, whereby the movement of the horizontal arm 13 requires the operation of the actuators of the actuator drives (DC electrical motors in the embodiment of Figs. 1 to 4). Because the transmission between these actuators and the vertical column 12 is self-locking (e.g. worm gear transmission, or the like), it is no longer possible to move the horizontal arm with respect to the vertical column manually after the locking device 15 has been turned with said manual lever to the second position (i.e. the position for locking the initial position adjustment).

In the embodiment of Figs. 1 to 4, the actuator drives moving the horizontal arm 13 in the longitudinal direction of the vertical column 12 and in the longitudinal direction of the horizontal arm 13 are arranged in the intermediate frame 16. Consequently, two actuator drives are provided for moving the horizontal arm 13 with respect to the vertical column in the embodiment of Figs. 1 to 4. These actuator drives comprise the actuators and the transmissions for being functionally connected to the vertical column 12 and the horizontal arm 13. The first actuator drive moves the intermediate frame 16 along the vertical column 12 in its longitudinal direction, *i.e*. generates its vertical movement, and the second actuator drive moves the horizontal arm 13 with respect to the intermediate frame 16 in the longitudinal direction of the horizontal arm 13, *i.e*. generates its horizontal movement. In the embodiment of the welding boom 10 shown in Figs. 1 to 4, the actuators of the actuator drives are DC electric motors having a steplessly adjustable rotation speed. In another welding boom according to the invention, they might as well be, for example, alternating-current motors or stepping motors having a rotation speed adjustable by a frequency converter. Further, in some embodiments, it would also be possible to apply hydraulic or pneumatic motors or linear actuators. In an embodiment, only one actuator drive may be provided for moving the horizontal arm with respect to the vertical column, when there is only one welding motion for moving the horizontal arm by means of an actuator drive, that is, when the welding boom only comprises an actuator moving the horizontal arm in either the longitudinal direction of the vertical column or the longitudinal direction of the horizontal arm. Because the embodiment of Figs. 1 to 4 also comprises an actuator drive for moving the vertical column 12 with respect to the base 11, the welding boom 10 of Figs. 1 to 4 comprises a total of three actuator drives.

In the embodiment shown in Figs. 1 to 4, the first end of the vertical column 12 is mounted on a base 11 movable on wheels along the ground so that the second end (upper end) of the vertical column 12 points upwards when the base 11 is in the horizontal position (i.e. is placed *e.g*. on a horizontal ground or floor surface). As shown in the figures, the wheels 23 of the base 11 are supported onto the frame of the base 11 with bearings, to be freely rotatable. In addition to the base 11, the embodiment of Figs. 1 to 4 comprises a push rod 17, by which the welding boom 10 can be moved manually by pushing or pulling (e.g. on the floor of an industrial hall). The wheels 23 may comprise a braking device by which the base 11 can be locked down to the place where welding boom 10 is to be used, and for locking the welding boom 10, for example during transport when it is carried by a vehicle or on a sloping surface.

In the embodiment of Figs. 1 to 4, the vertical column 12 is provided with a counterweight mechanism 18 for lightening the movement of the horizontal arm in the direction of the vertical column upon manual adjustment of the initial position. The counterweight mechanism 18 comprises a wire rope 19 (or a corresponding rope element), a pulley 20 arranged at the end of the vertical column 12, and a counterweight 21 arranged on the opposite side (shown in Fig. 2) of the vertical column. Furthermore, the counterweight mechanism 18 comprises, among other things, fastening means for fastening one end of the wire rope 19 to the intermediate frame 14 and the other end to the counterweight 21. The counterweight 21 is fastened to the vertical column 12 on the opposite side of the vertical column 12 with respect to the location of the horizontal arm 13 (*i.e. "counterweight side"* of the vertical column 12 shown in Fig. 2), to be movable in the longitudinal direction of the vertical column 12. The weight of the counterweight 21 is selected to be slightly smaller than or equal to the total weight of the intermediate frame 16 and the horizontal arm 13 as well as the other elements of the welding boom 10 fastened to them. Thus, the wire rope 19, guided to extend from the intermediate frame 14 across the vertical column 12 via the pulley 20 fastened to its upper end to the counterweight 21, lightens the lifting up of the intermediate frame 14 and the horizontal arm 13, as well as all the elements fastened to them. This facilitates the manual movement of the horizontal arm 13 to the initial position for welding. In an embodiment without an actual intermediate frame, the wire rope of the counterweight may be connected at its first end to the horizontal arm by a suitable mechanical structure so that it allows the movement of the horizontal arm in the longitudinal direction of the horizontal arm, as described above, remaining stationary at the vertical column in the longitudinal direction of the horizontal arm.

In the embodiment of Figs. 1 to 4 (as well as in other embodiments of the welding boom according to the invention), the welding gun fastener 14 at the end of the horizontal arm 13 is fastened to the end of the horizontal arm 13 to be pivotable to different positions and lockable in a desired position. Such pivoting of the welding gun fastener 14 may be implemented, for example, by means of a ball joint or the like, whereby the welding gun fastener 14 can be turned in any direction with respect to the horizontal arm 14 in an angle of at least 90°. In another embodiment, however, the welding gun fastener may be fastened to the end of the horizontal arm pivotably with respect to only one axis, or rigidly. Further, the welding gun fastener comprises a fastening device suitable for various welding guns, in which the welding gun can be fastened by means of, for example, jaws compressible towards each other, a clamping sleeve, or a corresponding mechanical arrangement.

In the embodiment of Figs. 1 to 4, the control of the actuator drives and the power supply is provided by a control unit 22. In the embodiment of Figs. 1 to 4, the control unit 22 is fixed in the lower part of the vertical column 12, below the range of vertical movement of the intermediate frame 16. Between the control unit 22 and the intermediate frame 16, a power supply cable (not shown in the figures) is provided, which is coilable along the vertical column and which allows the movement of the intermediate frame 16 in the longitudinal direction of the vertical column 12 from the vicinity of the control unit 22 up to the upper end (maximum height) of the vertical column 12. The control unit 22 comprises a programmable logic or corresponding control electronics, by which all the actuator-driven movements of the welding boom 10 can be programmed to take place automatically or can be controlled by a remote control unit (not shown in the figures) which can be connected to the control unit 22. The remote control unit may be operable in a wired or wireless manner. A wireless remote control unit may operate by means of e.g. an RF radio transmitter and a corresponding receiver in the control unit, on the basis of an infra-red transmitter/receiver, or on the basis of a wireless local area network, or the like.

When using the welding boom of Figs. 1 to 4, the welding boom 10 is moved by pushing and/or pulling with the push rod 17 to a suitable location in the vicinity of a work piece to be welded (e.g. a steel container or the like) so that the horizontal arm 13 and the welding gun to be fastened to the welding gun fastener 14 at its end can be moved all the way to the farthermost point of the welding joint in the work piece, seen from the vertical column 12. Next, a welding device (e.g. a MAG welding device) is brought next to the welding boom, and the welding gun of the welding device is fastened to the welding gun fastener 14. After this, the locking device 15 for the initial position adjustment of the horizontal arm 13 is released, and the horizontal arm 13 is moved manually, by using the initial position adjustment, to the selected initial position for welding. Next, the locking device 15 for the initial position adjustment is locked, whereby the initial position adjustment is locked and the horizontal arm 13 can no longer be moved manually with respect to the vertical column (and the work piece). After this, the welding device is turned on, and, if necessary, the welding head in the welding gun is moved by actuator drives more precisely with respect to the joint of the work piece so that the welding can be started. The welding device is activated, and moving of the welding head along the welding joint in the work piece is started, whereby a welding joint begins to form. The welding head can be moved automatically according to a preselected program, or manually by controlling the actuator drives by a remote control unit connected to the control unit 22 so that the welding head is moved along the joint to be welded. After the welding joint has been finished, the welding device is turned off and the locking device 15 for the initial position adjustment of the welding head is released, after which the welding gun fastener 14 and the welding gun in it can be moved farther from the work piece to be welded, by moving the horizontal arm 13 manually in a suitable way.

The welding boom according to the invention may be implemented, in many respects, in a way different from the embodiment shown in Figs. 1 to 4. For example, in an embodiment, the base may comprise support legs to be lowered onto the ground, and a spirit level, whereby it can be supported to the ground and adjusted to a precisely horizontal position. Further, in an embodiment, the base may be driven by an electrical motor and be electrically controllable and equipped with a separate drive battery, whereby the welding boom does not need to be pushed by hand but its movement by electrical motors can be controlled by e.g. a wired or wireless remote control unit. This may be the same or a different remote control unit that is used for controlling the actuator driven movements of the horizontal arm during welding. In other words, the welding boom according to the invention is not limited to the embodiments presented above, but it may vary within the scope of the appended claims.

## Claims

1. Welding boom (10) comprising a base (11), a vertical column (12) mounted on it, and a horizontal arm (13) fastened to the vertical column (12), wherein a welding gun fastener (14) is provided at the end of the horizontal arm (13) for fastening a welding gun of a welding device to the end of the welding boom (10), and wherein the horizontal arm (13) of the welding boom (10) is fastened to the vertical column (12) to be movable by a distance in the longitudinal direction of the vertical column (12) and/or in the longitudinal direction of the horizontal arm (13), wherein
- the welding boom (10) comprises manual adjustment of an initial position, for moving the horizontal arm (13) and the welding gun fastener (14) at the end thereof in the longitudinal direction of the vertical column (12) and/or in the longitudinal direction of the horizontal arm (13) to a desired initial position for welding,
- the welding boom (10) comprises a locking device (15) for locking the manual adjustment of the initial position, and that
- the welding boom (10) comprises, in addition to the manual adjustment of the initial position, at least one actuator drive for moving the horizontal arm (13) a distance in at least the longitudinal direction of the vertical column (12) and/or the longitudinal direction of the vertical arm (13) at an adjustable speed by means of the actuator drive, irrespective of the adjustment of the initial position, during welding by using the welding boom (10).

2. The welding boom (10) according to claim 1, comprising a counterweight mechanism (18) for assisting in the movement of the horizontal arm (13) in the longitudinal direction of the vertical column (12).

3. The welding boom (10) according to claim 1 or 2, wherein at least one actuator of the actuator drive is arranged in the area of the joint between the horizontal arm (13) and the vertical column (12) and is arranged to move the horizontal arm (13) with respect to the vertical column (12).

4. The welding boom (10) according to any of the preceding claims, wherein the horizontal arm (13) is fastened to the vertical column (12) to be movable along the vertical column (12) by means of an intermediate frame (16) fastened to be movable in the longitudinal direction of the vertical column (12).

5. The welding boom (10) according to claim 4, wherein the counterweight mechanism (18) comprises a counterweight (21), a pulley (20) and a wire rope (19) or a corresponding rope element, the wire rope (19) in the counterweight mechanism (18) being fastened at its first end to the intermediate frame (16) on the first side of the vertical column (12) and guided via the pulley (20) fastened to the upwards pointing end of the vertical column (12) to the other side of the vertical column (12) and further down to the counterweight (21) fastened to the vertical column to be movable in the longitudinal direction of the vertical column (12).

6. The welding boom (10) according to claim 4 or 5, wherein at least one actuator of the actuator drive is fastened to the intermediate frame (16).

7. The welding boom (10) according to any of the preceding claims, wherein the vertical column (12) is fastened to the base (11) to be movable a distance in the transverse direction from at least the vertical column (12) and the horizontal arm (13) by an actuator.

8. The welding boom (10) according to any of the preceding claims, wherein the welding gun fastener (14) at the end of the horizontal arm (13) is fastened at the end of the horizontal arm (13) to be movable into different positions and to be lockable in a desired position.

9. The welding boom (10) according to any of the preceding claims, wherein the base (11) comprises wheels (23) and a push rod (17) for moving the base (11) on the ground by means of the push rod (17).

10. The welding boom (10) according to any of the preceding claims, wherein the locking device (15) is a mechanical two-position switch which in its first position disconnects the transmission of the actuator drives between the vertical column (12) and the horizontal arm (13) so that the horizontal arm (13) is manually movable with respect to the vertical column (12), and which in its second position connects said at least one actuator drive between the vertical column (12) and the horizontal arm (13) so that the horizontal arm (13) is movable with respect to the vertical column (12) by means of said at least one actuator drive only.

11. The welding boom (10) according to any of the preceding claims, comprising a control unit (22) for controlling the actuator drives by a manual remote control unit and/or at least partly automatically.

## Patentansprüche

1. Schweißausleger (10) mit einer Basis (11), einer darauf montierten vertikalen Säule (12) und einem an der vertikalen Säule (12) befestigten horizontalen Arm (13), wobei am Ende des horizontalen Arms (13) eine Schweißpistolenhalterung (14) zum Befestigen einer Schweißpistole einer Schweißvorrichtung am Ende des Schweißauslegers (10) vorgesehen ist, und wobei der horizontale Arm (13) des Schweißauslegers (10) an der vertikalen Säule (12) so befestigt ist, dass er in Längsrichtung der vertikalen Säule (12) und/oder in Längsrichtung des horizontalen Arms (13) um eine Distanz beweglich ist, wobei
- der Schweißausleger (10) eine manuelle Einstellung einer Ausgangsposition aufweist, um den horizontalen Arm (13) und die Schweißpistolenhalterung (14) an dessen Ende in Längsrichtung der vertikalen Säule (12) und/oder in Längsrichtung des horizontalen Arms (13) in eine gewünschte Ausgangsposition zum Schweißen zu bewegen,
- der Schweißausleger (10) eine Verriegelungsvorrichtung (15) zum Verriegeln der manuellen Einstellung der Ausgangsposition umfasst, und dass
- der Schweißausleger (10) zusätzlich zur manuellen Einstellung der Ausgangsposition mindestens einen Aktuatorantrieb zum Bewegen des Horizontalarms (13) über eine Distanz in mindestens der Längsrichtung der vertikalen Säule (12) und/oder der Längsrichtung des vertikalen Arms (13) mit einer einstellbaren Geschwindigkeit mittels des Aktuatorantriebs unabhängig von der Einstellung der Ausgangsposition, während des Schweißens unter Verwendung des Schweißauslegers (10) umfasst.

2. Schweißausleger (10) nach Anspruch 1, umfassend einen Gegengewichtsmechanismus (18) zur Unterstützung der Bewegung des Horizontalarms (13) in Längsrichtung der vertikalen Säule (12).

3. Schweißausleger (10) nach Anspruch 1 oder 2, wobei mindestens ein Aktuator des Aktuatorantriebs im Bereich der Verbindung zwischen dem Horizontalarm (13) und der vertikalen Säule (12) angeordnet ist und dazu dient, den Horizontalarm (13) in Bezug auf die vertikale Säule (12) zu bewegen.

4. Schweißausleger (10) nach einem der vorhergehenden Ansprüche, wobei der Horizontalarm (13) über einen in Längsrichtung der Vertikalsäule (12) verschiebbar befestigten Zwischenrahmen (16) an der Vertikalsäule (12) entlang der Vertikalsäule (12) verschiebbar befestigt ist.

5. Schweißausleger (10) nach Anspruch 4, wobei der Gegengewichtsmechanismus (18) ein Gegengewicht (21), eine Seilrolle (20) und ein Drahtseil (19) oder ein entsprechendes Seilelement umfasst, wobei das Drahtseil (19) im Gegengewichtsmechanismus (18) mit seinem ersten Ende am Zwischenrahmen (16) auf der ersten Seite der Vertikalsäule (12) befestigt ist und über die am nach oben weisenden Ende der Vertikalsäule (12) befestigte Seilrolle (20) zur anderen Seite der Vertikalsäule (12) und weiter nach unten zu dem an der Vertikalsäule befestigten Gegengewicht (21) geführt ist, um in Längsrichtung der Vertikalsäule (12) beweglich zu sein.

6. Schweißausleger (10) nach Anspruch 4 oder 5, wobei mindestens ein Aktuator des Aktuatorantriebs am Zwischenrahmen (16) befestigt ist.

7. Schweißausleger (10) nach einem der vorhergehenden Ansprüche, wobei die vertikale Säule (12) an der Basis (11) befestigt ist, um durch einen Aktuator in Querrichtung um eine Distanz von mindestens der vertikalen Säule (12) und dem horizontalen Arm (13) bewegbar zu sein.

8. Schweißausleger (10) nach einem der vorhergehenden Ansprüche, wobei der Schweißpistolenhalter (14) am Ende des horizontalen Arms (13) am Ende des horizontalen Arms (13) befestigt ist, um in verschiedene Positionen bewegbar und in einer gewünschten Position arretierbar zu sein.

9. Schweißausleger (10) nach einem der vorhergehenden Ansprüche, wobei die Basis (11) Räder (23) und eine Schubstange (17) zum Bewegen der Basis (11) auf dem Boden mittels der Schubstange (17) umfasst.

10. Schweißausleger (10) nach einem der vorhergehenden Ansprüche, wobei die Verriegelungsvorrichtung (15) ein mechanischer Zweistellungsschalter ist, der in seiner ersten Stellung die Übertragung der Aktuatorantriebe zwischen der vertikalen Säule (12) und dem horizontalen Arm (13) unterbricht, so dass der horizontale Arm (13) manuell in Bezug auf die vertikale Säule (12) beweglich ist, und der in seiner zweiten Stellung den mindestens einen Aktuatorantrieb zwischen der vertikalen Säule (12) und dem horizontalen Arm (13) verbindet, so dass der horizontale Arm (13) nur mittels des mindestens einen Aktuatorantriebs in Bezug auf die vertikale Säule (12) beweglich ist.

11. Schweißausleger (10) nach einem der vorhergehenden Ansprüche, umfassend eine Steuereinheit (22) zum Steuern der Aktuatorantriebe durch eine manuelle Fernsteuereinheit und/oder zumindest teilweise automatisch.

## Revendications

1. Flèche de soudage (10) comprenant une base (11), une colonne verticale (12) montée sur celle-ci et un bras horizontal (13) fixé à la colonne verticale (12), une fixation de pistolet de soudage (14) étant prévue à l'extrémité du bras horizontal (13) pour fixer un pistolet de soudage d'un dispositif de soudage à l'extrémité de la flèche de soudage (10), le bras horizontal (13) de la flèche de soudage (10) étant fixé à la colonne verticale (12) pour être mobile sur une distance dans la direction longitudinale de la colonne verticale (12) et/ou dans la direction longitudinale du bras horizontal (13), dans laquelle
- la flèche de soudage (10) comprend un réglage manuel d'une position initiale, pour déplacer le bras horizontal (13) et la fixation du pistolet de soudage (14) à son extrémité dans la direction longitudinale de la colonne verticale (12) et/ou dans la direction longitudinale du bras horizontal (13) jusqu'à une position initiale souhaitée pour le soudage,
- la flèche de soudage (10) comprend un dispositif de verrouillage (15) pour verrouiller le réglage manuel de la position initiale, et
- la flèche de soudage (10) comprend, outre le réglage manuel de la position initiale, au moins un entraînement d'actionneur pour déplacer le bras horizontal (13) sur une distance dans au moins la direction longitudinale de la colonne verticale (12) et/ou la direction longitudinale du bras vertical (13) à une vitesse réglable au moyen de l'entraînement d'actionneur, indépendamment du réglage de la position initiale, pendant le soudage à l'aide de la flèche de soudage (10).

2. Flèche de soudage (10) selon la revendication 1, comprenant un mécanisme de contrepoids (18) pour aider à déplacer le bras horizontal (13) dans la direction longitudinale de la colonne verticale (12).

3. Flèche de soudage (10) selon la revendication 1 ou 2, dans laquelle au moins un actionneur de l'entraînement d'actionneur est disposé dans la zone de l'articulation entre le bras horizontal (13) et la colonne verticale (12) et est disposé pour déplacer le bras horizontal (13) par rapport à la colonne verticale (12).

4. Flèche de soudage (10) selon l'une quelconque des revendications précédentes, dans laquelle le bras horizontal (13) est fixé à la colonne verticale (12) pour être mobile le long de la colonne verticale (12) au moyen d'un cadre intermédiaire (16) fixé pour être mobile dans la direction longitudinale de la colonne verticale (12).

5. Flèche de soudage (10) selon la revendication 4, dans laquelle le mécanisme de contrepoids (18) comprend un contrepoids (21), une poulie (20) et un câble métallique (19) ou un élément de câble correspondant, le câble métallique (19) dans le mécanisme de contrepoids (18) étant fixé à sa première extrémité au cadre intermédiaire (16) sur le premier côté de la colonne verticale (12) et guidé via la poulie (20) fixée à l'extrémité pointant vers le haut de la colonne verticale (12) vers l'autre côté de la colonne verticale (12) et plus loin vers le bas jusqu'au contrepoids (21) fixé à la colonne verticale pour être mobile dans la direction longitudinale de la colonne verticale (12).

6. Flèche de soudage (10) selon la revendication 4 ou 5, dans laquelle au moins un actionneur de l'entraînement d'actionneur est fixé sur le cadre intermédiaire (16).

7. Flèche de soudage (10) selon l'une quelconque des revendications précédentes, dans laquelle la colonne verticale (12) est fixée à la base (11) pour pouvoir être déplacée par un actionneur sur une certaine distance dans la direction transversale à partir d'au moins la colonne verticale (12) et du bras horizontal (13).

8. Flèche de soudage (10) selon l'une quelconque des revendications précédentes, dans laquelle la fixation du pistolet de soudage (14) à l'extrémité du bras horizontal (13) est fixée à l'extrémité du bras horizontal (13) pour pouvoir être déplacée dans différentes positions et pour pouvoir être verrouillée dans une position souhaitée.

9. Flèche de soudage (10) selon l'une quelconque des revendications précédentes, dans laquelle la base (11) comprend des roues (23) et une tige de poussée (17) pour déplacer la base (11) sur le sol au moyen de la tige de poussée (17).

10. Flèche de soudage (10) selon l'une quelconque des revendications précédentes, dans laquelle le dispositif de verrouillage (15) est un commutateur mécanique à deux positions qui, dans sa première position, déconnecte la transmission des entraînements d'actionneur entre la colonne verticale (12) et le bras horizontal (13) de sorte que le bras horizontal (13) puisse être déplacé manuellement par rapport à la colonne verticale (12), et qui, dans sa seconde position, connecte ledit au moins un entraînement d'actionneur entre la colonne verticale (12) et le bras horizontal (13) de sorte que le bras horizontal (13) puisse être déplacé par rapport à la colonne verticale (12) uniquement au moyen dudit au moins un entraînement d'actionneur.

11. Flèche de soudage (10) selon l'une quelconque des revendications précédentes, comprenant une unité de commande (22) pour commander les entraînements d'actionneur par une unité de commande à distance manuelle et/ou au moins en partie automatiquement.
